(19)

Europäisches
Patentamt

European
Patent Office

Office européen
des brevets

(11) **EP 4 610 120 A1**

(12) **EUROPEAN PATENT APPLICATION**

(43) Date of publication:
**03.09.2025 Bulletin 2025/36**

(21) Application number: **24160939.5**

(22) Date of filing: **01.03.2024**

(51) International Patent Classification (IPC):
**B60T 8/171** (2006.01)      **B60T 8/1761** (2006.01)

(52) Cooperative Patent Classification (CPC):
**B60T 8/171; B60T 8/17616;** B60T 2240/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **ARIKERE, Adithya**
**422 50 Göteborg (SE)**
• **KUMRU, Murat**
**413 06 Göteborg (SE)**
• **MARZBANRAD, Alireza**
**417 65 Göteborg (SE)**
• **LAINE, Leo**
**414 84 Göteborg (SE)**

(74) Representative: **Valea AB**
**Box 1098**
**405 23 Göteborg (SE)**

(54) **ESTIMATING STATUS OF A WHEEL BASED ON ACCELERATION DATA**

(57)      A computer system (900) comprising processing circuitry (902) configured to handle acceleration data of an accelerometer (2) is provided. The accelerometer (2) is arranged to measure acceleration of a wheel (10) of a vehicle (1). The processing circuitry (902) is configured to obtain acceleration data from the accelerometer (2). The acceleration data is indicative of a total acceleration measured by the accelerometer (2). The processing circuitry (902) is configured to derive from the acceleration data, a set of acceleration components. Each component in the set of acceleration components indicates a respective portion of the total acceleration. The processing circuitry (902) is configured to estimate a status of the wheel (10) based on the set of acceleration components. The status of the wheel (10) comprises a rotational angle of the wheel (10) and/or a rotational motion of the wheel (10).

Fig. 1

EP 4 610 120 A1

**Description**

**TECHNICAL FIELD**

The disclosure relates generally to estimating a status of a wheel. In particular aspects, the disclosure relates to estimating status of a wheel based on acceleration data. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

A common parameter for handling and/or predicting motion of a vehicle is wheel status of one or more wheels. Handling vehicle motion may relate to stability. Wheel status may typically comprise a rotational angle and/or a rotational motion of a particular wheel. For example, the rotational motion of a wheel may be used to predict and/or handle stability of a vehicle.

Wheel speed sensors involving toothed wheels with hall effect sensors are often used in vehicles for measuring wheel status such as wheel rotational speed and rotational angle. If these sensors stop working or were to report inaccurate data, as is a known problem, there is no alternative or fallback sensors available. As a result, motion prediction and/or motion handling may be inaccurate or may not be possible to perform.

Hence, there is a strive to improve reliability and accuracy of estimating wheel status of a vehicle.

**SUMMARY**

According to a first aspect of the disclosure, a computer system comprising processing circuitry configured to handle acceleration data of an accelerometer arranged to measure acceleration of a wheel of a vehicle is provided. The processing circuitry is configured to obtain acceleration data from the accelerometer. The acceleration data is indicative of a total acceleration measured by the accelerometer over a time period. The processing circuitry is configured to derive from the acceleration data, a set of acceleration components for the time period. Each component in the set of acceleration components indicates a respective portion of the total acceleration. In other words, each component in the set of acceleration components may indicate a respective part of the total acceleration. All components of the set of acceleration components may sum to the total acceleration. The processing circuitry is configured to estimate a status of the wheel based on the set of acceleration components. The status of the wheel comprises a rotational angle of the wheel and/or a rotational motion of the wheel. The rotational motion of the wheel may typically be a velocity such as a rotational wheel speed.

A component as used herein may mean any suitable representation or indication of acceleration during the time period.

The first aspect of the disclosure may seek to improve reliability and accuracy of estimating wheel status of a vehicle.

A technical benefit may include that status of the wheel such as the rotational angle of the wheel and/or the rotational motion of the wheel may be accurately estimated. This is since each component may indicate its own respective part of the total acceleration which means that the acceleration component with the most suitable and/or fine-grained acceleration data can be used for estimating the status of the wheel for improved accuracy, or multiple components may be used to complement information of the status of the wheel for improved accuracy. For example some components may be more suitable for estimating rotational angle, and some may be more suitable for estimating rotational motion. Furthermore, it is enabled to use acceleration data of the wheel as a measurement for estimating wheel status. It follows that the wheel status estimation may be used jointly with other wheel status estimations to improve accuracy or serve as a redundant measurement, thereby improving accuracy and reliability of the estimations.

Optionally in some examples, including in at least one preferred example, the set of acceleration components comprises any one or more out of a gravitational acceleration component, a centripetal acceleration component, and a road-contact acceleration component. In these examples, the gravitational acceleration component is indicative of a gravitational acceleration caused by a gravitational force as the wheel is rotated. In these examples, the centripetal acceleration component is indicative of a centripetal acceleration caused by the accelerometer being subject to a centripetal force when the wheel is rotated. In these examples, the road-contact acceleration component is indicative of an acceleration caused by the accelerometer being subject to a vertical force as a tire of the wheel impacts a road surface when the wheel is rotated over the road surface.

A technical benefit may include improved reliability and accuracy of estimating the status of the wheel. This is since each one of the gravitational acceleration component, the centripetal acceleration component, and the road-contact acceleration component may have different granularities and accuracy and may indicate different information of the acceleration usable to estimate the status of the wheel. In isolation, each component at least improves accuracy over using the total acceleration as more details of the acceleration of the wheel may be indicated without noise from other acceleration components. The information of the different components may complement information indicated by another component to more accurately estimate the status of the wheel.

Optionally in some examples, including in at least one preferred example, the rotational motion is estimated based on a periodicity or frequency associated with any one or more components out of the set of components, and preferably based on the gravitational acceleration component and/or the road-contact acceleration component.

A technical benefit may include improved reliability and accuracy of estimating the status of the wheel. This is since using frequency analysis, it is possible to accurately find the periodicity of the gravitational acceleration component and/or the road-contact acceleration component. The periodicity will correspond to the speed of the wheel, and can thereby accurately be used to estimate the rotational motion of the wheel. In particular, the total acceleration may not reveal the wheel rotational motion directly, therefore, it may be needed to process the total acceleration for this purpose. This is achieved by frequency analysis or any suitable manner of determining the periodicity and/or accounting for the set of acceleration components. Thereby, improved reliability and accuracy of estimating status of the wheel is achieved.

Optionally in some examples, including in at least one preferred example, the rotational motion is estimated based on an amplitude associated with any one or more components out of the set of components, preferably based on the centripetal acceleration component.

A technical benefit may include improved reliability and accuracy of estimating the status of the wheel. This is since the centripetal acceleration component may be used as an alternative or accuracy improvement for estimating the rotational motion of the wheel.

Optionally in some examples, including in at least one preferred example, the rotational angle of the wheel is estimated based on the road-contact acceleration component.

A technical benefit may include improved reliability and accuracy of estimating the status of the wheel. This is since each road-contact event can be clearly identified from the road-contact acceleration component in that there are spikes of amplitude. During these events, it may be determined how the accelerometer is directed towards a road surface, and a rotational angle of the wheel can therefore be estimated, at least during the road-contact event. Alternatively, the road-contact acceleration component may implicitly be used to estimate the status of the wheel with respect to the rotational angle of the wheel. This is since this acceleration component may be filtered from the total acceleration to improve accuracy in deriving the set of acceleration components from the acceleration data.

Optionally in some examples, including in at least one preferred example, the rotational angle of the wheel is estimated based on of the gravitational acceleration component. The amplitude of the gravitational acceleration component may determine the rotational angle which can be determined by frequency analysis of the gravitational acceleration component.

A technical benefit may include improved reliability and accuracy of estimating the status of the wheel. This is since the gravitational acceleration component can be used as redundancy and/or for improved accuracy to estimate the rotational angle.

Optionally in some examples, including in at least one preferred example, the gravitational acceleration component is derived based on identifying a variation in the acceleration data. Typically, this may be performed based on frequency analysis to find a periodicity of the gravitational acceleration component. A predefined model for how the gravitational acceleration component behaves, e.g., with respect to the total acceleration and/or other parameters of a motion of the vehicle, may be used to derive the gravitational acceleration component.

A technical benefit may include improved reliability and accuracy of estimating the status of the wheel. This is since the gravitational acceleration component may accurately estimate the rotational motion of the wheel.

Optionally in some examples, including in at least one preferred example, the road-contact acceleration component is derived based on identifying an road-contact event of the acceleration data, and based on identifying a variation in the acceleration data caused by the identified road-contact event. A predefined model for how the road-contact acceleration component behaves, e.g., with respect to the total acceleration and/or other parameters of a motion of the vehicle, may be used to derive the road-contact acceleration component.

A technical benefit may include improved reliability and accuracy of estimating the status of the wheel. This is since the gravitational acceleration component may accurately estimate the rotational angle of the wheel. This is since the centripetal acceleration component may be used as an alternative or accuracy improvement for estimating the rotational motion of the wheel.

Optionally in some examples, including in at least one preferred example, the centripetal acceleration component is derived based on a predefined model and a mounting position of the accelerometer with respect to the wheel or tire of the wheel.

A technical benefit may include improved reliability and accuracy of estimating the status of the wheel. This is since the mounting position of the accelerometer with respect to the wheel or tire of the wheel enables improved accuracy of the centripetal acceleration. When the accelerometer is mounted on a rim of the wheel, an estimation model for estimation of acceleration and/or wheel motion may be more accurate with respect to some acceleration components, e.g., the gravitational acceleration component, due to following a rigid body motion, e.g., which may further be obtained by a vehicle Inertial Measurement Unit (IMU) which can be used as a basis for deriving the set of acceleration components and/or estimating the status of the wheel. When the accelerometer is mounted in a tire of the wheel, providing such an estimation model is more difficult and may relate to lower accuracy to some acceleration components, e.g., the gravitational acceleration component. This means that the model complexity may be higher but instead a road tire contact event can be captured with higher accuracy. In particular, when the accelerometer is mounted in the tire, the road-contact acceleration component may be more accurate than when the accelerometer is mounted in the rim. In some examples, when the accelerometer is mounted in the rim, it may not be possible to model the road-contact acceleration component. When the accelerometer is in the tire, other acceleration components may have lower accuracy than when the accelerometer is mounted in the rime. In other words, the mounting position of the accelerometer may determine the model to use for estimating the estimate the status of the wheel and may determine the accuracy of the set of acceleration components.

Optionally in some examples, including in at least one preferred example, the processing circuitry is configured to estimate an angle of a slope travelled by the vehicle based on the set of components. The processing circuitry is configured to estimate the angle by:

- detecting a road-contact event based on the road-contact acceleration component, and
- in response to detecting the road-contact event, identifying an angular shift of the rotational angle of the wheel and the gravitational acceleration component, and
- estimating the angle of the slope based on the identified angular shift.

A technical benefit may include improved reliability and accuracy of estimating the status of the wheel, in particularly how the wheel is located in the slope with respect to an angle of the slope.

Optionally in some examples, including in at least one preferred example, the processing circuitry is configured to estimate the status of the wheel further based on one or more measurements of an IMU of the vehicle.

A technical benefit may include improved reliability and accuracy of estimating the status of the wheel. This is since accuracy is improved by comparing or combining wheel status with the IMU measurements. Furthermore, reliability is improved as two independent sources may measure data and estimate the status of the wheel which further have independent sources of error such that inaccuracy or unavailability of sensor/acceleration data for both sources at the same time, is mitigated or avoided.

According to a second aspect of the disclosure, a vehicle comprising the computer system according to the first aspect is provided. The vehicle comprises an accelerometer configured to measure acceleration of a wheel of the vehicle.

The second aspect of the disclosure may seek to improve reliability and accuracy of estimating wheel status of a vehicle.

Technical benefits of the second aspect may correspond to the technical benefits of the first aspect.

Optionally in some examples, including in at least one preferred example, the accelerometer is a single-axis accelerometer configured to only measure acceleration along a single axis. This example may apply to all aspects or examples describe herein.

A technical benefit may include that it is possible to measure the acceleration, and further to estimate the status of the wheel in an accurate manner using low-cost equipment.

According to a third aspect of the disclosure, a computer-implemented method for handling acceleration data of an accelerometer arranged to measure acceleration of a wheel of a vehicle is provided.

The method comprises, by processing circuitry of a computer system, obtaining acceleration data from the accelerometer. The acceleration data is indicative of a total acceleration measured by the accelerometer over a time period.

The method comprises, by the processing circuitry, deriving from the acceleration data, a set of acceleration components for the time period. Each component in the set of acceleration components indicates a respective portion of the total acceleration.

The method comprises, by the processing circuitry, estimating a status of the wheel based on the set of acceleration components. The status of the wheel comprises a rotational angle of the wheel and/or a rotational motion of the wheel.

Optionally in some examples, including in at least one preferred example, the set of acceleration components comprises any one or more out of a gravitational acceleration component, a centripetal acceleration component, and a road-contact acceleration component.

In these examples, the gravitational acceleration component is indicative of a gravitational acceleration caused by a gravitational force as the wheel is rotated. In these examples, the centripetal acceleration component is indicative of a centripetal acceleration caused by the accelerometer being subject to a centripetal force when the wheel is rotated. In these examples, the road-contact acceleration component is indicative of an acceleration caused by the accelerometer being subject to a vertical force as a tire of the wheel impacts a road surface when the wheel is rotated over the road surface.

Optionally in some examples, including in at least one preferred example, the rotational motion is estimated based on any one or more out of:

- a periodicity or frequency associated with any one or more components out of the set of components, and preferably based on the gravitational acceleration component or the road-contact acceleration component, and
- an amplitude associated with any one or more components out of the set of components, preferably based on the centripetal acceleration component.

Optionally in some examples, including in at least one preferred example, the rotational angle of the wheel is estimated based on any one or more out of:

- the road-contact acceleration component, and
- frequency analysis of the gravitational acceleration component.

Optionally in some examples, including in at least one preferred example, the method further comprises, based on the set of components, estimating an angle of a slope travelled by the vehicle by:

- detecting a road-contact event based on the road-contact acceleration component,
- in response to detecting the road-contact event, identifying an angular shift of the rotational angle of the wheel and the gravitational acceleration component, and
- estimating the angle of the slope based on the identified angular shift.

Examples and/or technical benefits of any of the first, second, or third aspects apply to any of the other first, second, or third aspects, in a corresponding manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

**FIG. 1** is an illustration of a vehicle and a wheel according to an example.
**FIG. 2** is an illustration of a flow chart of a method according to example.
**FIGS. 3a-d** are illustrations of diagrams illustrating acceleration data according to an example.
**FIGS. 4a-d** are illustrations of diagrams illustrating acceleration data according to an example.
**FIG. 5** is an illustration of a wheel in a slope according to an example.
**FIGS. 6a-d** are illustrations of diagrams illustrating acceleration data according to an example.
**FIG. 7** is another view of **FIG. 1,** according to an example.
**FIG. 8** is a flow chart of an exemplary method according to an example.
**FIG. 9** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

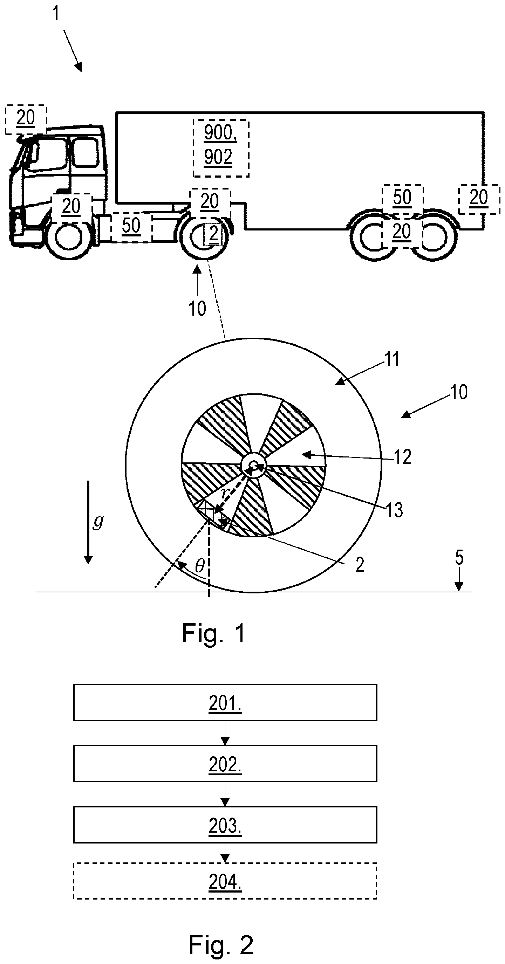

**FIG. 1** illustrates a **vehicle 1** and a **wheel 10** of the vehicle 1 according to an example. The vehicle 1 may be any wheel-driven vehicle, such as a car, truck, bus, vehicle combination with towed units, or any heavy-duty vehicle.

To perform motion prediction or motion control of the vehicle 1, such as stability functions, the vehicle 1 may comprise a **set of sensors 20,** e.g., used for measuring a current motion or status of the vehicle 1. The set of sensors 20 may comprise any suitable sensors, e.g., camera, wheel speed sensor, a speedometer, etc.

To perform motion prediction or motion control of the vehicle 1, such as stability functions, the vehicle 1 may additionally or alternatively comprise an IMU 50, e.g., as part of the set of sensors 20. The IMU may be able to measure a status of the wheel 10 and may be used as redundant measurements of examples herein.

The wheel 10 may typically comprise a **wheel hub 12,** and a **tire 11.** The wheel 10 may have a **center point 13,** in the middle of the wheel hub 12.

The wheel 10 is arranged to rotate over a road surface 5, as the vehicle 1 travels. The road surface 5 may in some examples be part of a slope.

The wheel 10 comprises an **accelerometer 2.** The accelerometer 2 may be configured to measure acceleration of the wheel 10. The accelerometer 2 may be a single-axis accelerometer configured to measure acceleration only in a single axis. Single-axis accelerometers are cheap, resource, efficient, reliable, and may be sufficiently accurate for examples herein. The accelerometer 2 may be a multi-axes accelerometer configured to measure acceleration along multiple axes. Multi-axes accelerometers may be more accurate than single-axis accelerometers as more acceleration data can be measured and compared against different axes.

The accelerometer 2 may be arranged or mounted in any suitable part of the wheel 10, e.g., in or as part of the tire 11, in or as part of the wheel hub 12, and/or mounted in a rim of the wheel 10.

The accelerometer 2 may be configured to measure acceleration and to obtain acceleration data of the wheel 10 according to examples herein.

The accelerometer 2 may be mounted at a **radius r** from the center point 13. In some examples herein, a position of the accelerometer 2 may be predefined, e.g., by the radius r and optionally an initial angle.

The wheel 10 and accelerometer 2 is subject to a gravitational force defined by the well-known gravitational constant/vector g, which may be used to obtain acceleration data herein.

As the wheel 10 is rotated, it may be subject to a radial force (not illustrated).

As the wheel 10 is rotates, the wheel 10 is subject to a **rotational angle $\theta$** of the wheel 10. The rotational angle may be measured along a predefined vertical axle.

As the wheel 10 is rotated, the accelerometer 2 measures acceleration, which may be used by examples herein to estimate a status of the wheel 10, e.g., motion and the rotation angle $\theta$.

Examples herein may be performed by a **computer system 900** and/or a **processing circuitry 902** therein. The computer system 900 and/or the processing circuitry 902 may be comprised in any suitable location of the vehicle 1, e.g., as part of an Electronic Control Unit (ECU) of the vehicle 1. Alternatively, the computer system 900 and/or by the processing circuitry 902 may be comprised in a remote location such as in a server or part of a cloud service.

The computer system 900 and/or by the processing circuitry 902 may be communicatively connected to entities of the vehicle 1, e.g., such that entities of the vehicle 1 can be controlled or communicated with by the computer system 900 and/or the processing circuitry 902. For example, the computer system 900 and/or by the processing circuitry 902 may be able to obtain acceleration data from the accelerometer 2. In some examples, the computer system 900 and/or by the processing circuitry 902 may further be able to obtain measurements from the IMU 50.

Some examples herein comprise estimating a status of the wheel 10, based on a characteristic shape of an acceleration profile caused by a change in orientation of a gravity vector in a sensor reference frame of the accelerometer 2, due to wheel rotation.

Some examples herein disclose a way to use a single-axis acceleration signal from the accelerometer 2, mounted in the tire 11, or as being rim-mounted in the wheel 10, to estimate the wheel rotational speed and position.

Tire-Pressure Monitor Systems (TPMS) or Tire Monitor Systems (TMS) may already contain accelerometers such as a single-axis accelerometers or even full 6 Degrees of Freedom (DoF) IMUs whose outputs may be used with examples herein. In other words, the accelerometer 2 may be an accelerometer of a TPMS or TMS system of the wheel 10.

Some examples herein comprises enabling high-frequency output from the accelerometer 2. To achieve this, the accelerometer 2 may be powered using an energy harvesting unit which is configured to harvest energy of the motion of the wheel 10, or when braking the wheel 10. An alternative may be to power the accelerometer 2 by a wireless charging module in connection with the accelerometer. The accelerometer 2 may comprise a battery such that it does not need constant power from the wireless charging module or energy harvesting module.

**FIG. 2** is a flow chart of a computer-implemented method for handling acceleration data of the accelerometer 2 according to an example. The accelerometer 2 is arranged to measure acceleration of the wheel 10 of the vehicle 1. In some examples, the accelerometer 2 is a single-axis accelerometer configured to only measure acceleration along a single axis.

The method may be performed by the computer system 900 and/or by the processing circuitry 902. The method comprises the following actions 201-204. Dashed boxes in FIG. 2 may indicate optional actions. The actions may be performed in any suitable order.

**Action 201**

The method comprises obtaining acceleration data from the accelerometer 2. The acceleration data is indicative of a total acceleration measured by the accelerometer 2 over a time period, such as any suitable time interval, e.g., 1 -10 seconds.

The appropriate time period may depend on a longitudinal velocity of the vehicle 1, e.g., as obtained by a speedometer of the vehicle 1. As an example, if the vehicle 1 is moving at a relatively high longitudinal speed, e.g., 80 Kilometers per hour (km/h), which would correspond to a complete wheel rotation of the wheel 10 to around 0.15 s and accounting for some suitable error margin. In these situations, a 7 full periods of the acceleration data of the wheel 10 may be obtained in 1 second, which is deemed to provide sufficient information of the acceleration of the wheel 10. When the speed of the vehicle 1 is lower, it will potentially take longer time to observe the sufficient information and therefor the time period may be adjusted based on the speed of the vehicle 1, e.g., based on a predefined model.

**Action 202**

The method comprises deriving from the acceleration data, a set of acceleration components for the time period. Each component in the set of acceleration components indicates a respective portion of the total acceleration.

The set of acceleration components comprises any one or more out of a gravitational acceleration component, a centripetal acceleration component, and a road-contact acceleration component. These components may be all components or a subset of all components in the set of acceleration components. These components may be derived from the total acceleration based on any suitable technique, such as using frequency analysis and/or a predefined model for the components.

The gravitational acceleration component is indicative of a gravitational acceleration caused by a gravitational force as the wheel 10 is rotated.

The centripetal acceleration component is indicative of a centripetal acceleration caused by the accelerometer 2 being subject to a centripetal force when the wheel 10 is rotated.

The road-contact acceleration component is indicative of an acceleration caused by the accelerometer 2 being subject to a vertical force as a tire 11 of the wheel 10 impacts a road surface 5 when the wheel 10 is rotated over the road surface 5.

In some examples, the set of acceleration components may be derived based on predefined models and/or based on frequency analysis of the total acceleration data over the time period. Some particulars relating to the derivation of some of the components in the set of acceleration components follow below.

Deriving the set of acceleration components may be different for each type of acceleration component, but may typically be performed based on frequency analysis, e.g., by selecting one or more frequencies that inhibits a certain trait for a specific component, such as the frequencies in a set range, or frequencies associated with a relatively highest or lowest amplitude, or based on any suitable predefined model for finding acceleration components.

In some examples, the gravitational acceleration component is derived based on an assumption that the gravitational acceleration exhibits sustained oscillations. Accordingly, once a computation of a frequency content of the acceleration data is made, it is possible to observe a high-power component, e.g., the gravitational acceleration component based on a predefined model which may defined an interval for this component accounting for a possible range of wheel rotational speed of the wheel 10.

In some examples, the gravitational acceleration component is derived based on obtaining the gravitational acceleration component using a bandpass filter and the acceleration data.

In some examples, the gravitational acceleration component is derived based on identifying a variation in the acceleration data. This is since the gravitational acceleration component may be the dominant component of the set of acceleration components which may, except during road-contact events, be modelled as the acceleration data. In other words, the gravitational component may be the acceleration data, with other acceleration components filtered out.

In some examples, the road-contact acceleration component is derived based on identifying an road-contact event of the acceleration data, and/or optionally based on identifying an impact change in the acceleration data caused by the identified road-contact event.

In some examples, the centripetal acceleration component is derived based on a predefined model and a mounting position of the accelerometer 2 with respect to the wheel 10 or the tire 11 of the wheel 10.

In some examples, the centripetal acceleration component is derived based on an assumption that the centripetal acceleration is a slowly varying component. Consequently, it may be computed by, for example, using a moving average filter e.g., producing a mean and/or average acceleration over a certain interval of time.

In some examples, the centripetal acceleration component is derived based on obtaining the centripetal acceleration component using a lowpass filter. However, such an approach may not be practical, e.g., due to the time constant. Hence, the centripetal acceleration component may be of use when making an observer for such estimation where it may be a dominant term at a set interval of vehicle or wheel speed, e.g., mid to high speed.

The centripetal acceleration component may be DC term with respect to the total acceleration.

**Action 203**

The method comprises estimating a status of the wheel 10 based on the set of acceleration components. The status of the wheel 10 comprises a rotational angle of the wheel 10 and/or a rotational motion of the wheel 10. The rotational motion of the wheel 10 may be a wheel speed or an angular velocity or rotational acceleration of the wheel 10. The rotational angle of the wheel 10 may be a rotated angle with respect to any suitable defined position of the wheel, e.g., based on an angle associated with a mounting location of the accelerometer 2 in the wheel 10, and/or it may be a relative angle the wheel 10 has rotated during the time period.

The status of the wheel may additionally in some examples indicate a slope of the road surface 5 on which the wheel 10 is travelling.

In some examples, estimating the status of the wheel 10 may further be based on one or more measurements of the IMU 50 of the vehicle 1, e.g., if available. Estimating the status of the wheel may further be based on any suitable data available, different from the acceleration data, e.g., sensor data obtained from the set of sensors 20. In other words, the status of the wheel 10 may use acceleration data, and other redundant data as a basis for estimation. Using multiple data sources increase accuracy and reliability of estimating the status of the wheel 10.

In some examples, the rotational motion is estimated based on a periodicity or frequency associated with any one or more components out of the set of components, preferably based on the gravitational acceleration component or the road-contact acceleration component. These components are preferred as they may have a clear periodicity which can be more accurately derived. The periodicity may define the rotational motion of the wheel 10, i.e., as it is the same as the speed of the rotation of the wheel. Additionally or alternatively, the rotational motion may be estimated based on an amplitude associated with any one or more components out of the set of components preferably based on the centripetal acceleration component. The amplitude may estimate the rotational motion since the amplitude of the centripetal acceleration component or the total acceleration is primarily induced by the centripetal acceleration, which directly indicates the rotational speed. Accordingly, it possible to obtain the rotational speed considering the offset of the acceleration signal, e.g., by a simple mapping or by a predefined calculation model. As noted above, the amplitude of the total acceleration can be used, but may be more accurately found by the centripetal acceleration component.

In some examples, the rotational angle of the wheel 10 is estimated based on the road-contact acceleration component. This is since the road-contact acceleration component indicates for each revolution of the wheel 10, when the accelerometer 2 is acted upon with a force due to contact with the road. Hence, one or more road-contact event may be detected as the wheel 10 rotates over the road surface 5. These events may be detected when the part of the tire 11 which is closest to the accelerometer 2 contacts the road surface 5, causing the accelerometer to move vertically due to the contact. Thus, at a road-contact event, the rotational angle may be accurately estimated, at least momentarily, to be with respect to the position of the accelerometer 2 towards the road surface 5. The rotational angle between each road-contact event may be estimated based on a mapping of the road-contact acceleration component or other acceleration components, and/or based on a speed/time since the accurately estimated rotational angle of the road-contact event. In some examples, the road-contact acceleration component may be filtered from the acceleration data to improve estimations using the other acceleration components.

In some examples,, a rate of detected contact events may be used to further estimate the rotational motion as discussed above, or to improve said estimation. Additionally or alternatively, the rotational angle of the wheel 10 may be estimated frequency analysis of the gravitational acceleration component. This is since the amplitude of the gravitational acceleration component may be directly corresponding to the rotational angle of the wheel 10. To be able to compute this amplitude, gravitational acceleration component is extracted the total acceleration by means of a predefined analysis method, such as by using filtering or a frequency domain analysis, e.g., as part of actions 201-202, and further, the amplitude is used to estimate the rotational angle of the wheel 10.

**Action 204**

In some examples the method further comprises, estimating an angle of a slope travelled by the vehicle 1 based on the set of components. The estimation of the angle of the slope may be represented as a status of the wheel 10, i.e., an angle of the slope that the wheel 10 is travelling on.

The slope may be estimated by detecting a road-contact event based on the road-contact acceleration component. The road-contact event may be during a revolution of the wheel 10 when one or more pulses or spikes of the road-contact acceleration component may be detected, typically in opposite directions following a predefined pattern. The road-contact event may be detected based on a periodicity or frequency associated of the road-contact acceleration component. In response to detecting the road-contact event, estimating the angle of the slop comprises identifying an angular shift of the rotational angle of the wheel 10 and the gravitational acceleration component. The angular shift may be identified based on comparing the gravitational acceleration component and the road-contact acceleration component as when the vehicle 1 were driving on a road without a slope, e.g., at the same vehicle speed. The angular shift will occur due to the accelerometer being at a different rotational angle of the wheel 10, when the road-contact event occurs. This is since the road-contact event will happen earlier or later in a revolution of the wheel 10, based on if the vehicle 1 is going up or down a slope. The angle of the slope may then be estimated based on the identified angular shift, e.g., based on a mapping or a predefined model. Vehicle speed of the vehicle 1 may not be needed to estimate the angle of the slope. In principle, the identified angular shift may directly map to the road slope. However, for some scenarios, the identified angular shift may comprise noise and may need some filtering or further processing, e.g., potentially using successive observations such as of subsequently identified angular shifts.

With reference to FIG. 1., the accelerometer 2 may be mounted at the radius r from the center of rotation, i.e., the center point 13. An observation axis of the accelerometer 2 may be directed outwards from the center point 13. The rotational angle $\theta$ indicates the wheel's rotational angle and may be defined as zero when the observation axis points exactly towards the road surface 5. The gravitational acceleration vector is denoted by g.

The total acceleration observed by the accelerometer 2 may be denoted as $a_t$ and may be defined as a sum of the set of acceleration components, as in Eq. 1.

$$a_t = a_c + a_g + a_p \qquad (\mathrm{Eq.1})$$

$a_c$ may denote the centripetal acceleration component.
$a_g$ may denote the gravitational acceleration component, i.e., the observed gravitational acceleration.
$a_p$ may denote the road-contact acceleration component, i.e., the acceleration due to vertical forces originated by a contact between the tire 11 and the road surface 5.

The three components as part of Eq. 1 as defined above may in some examples be assumed to be the dominant factors of the total acceleration of the wheel 10, and the rest of possible accelerations, for example, due to external disturbances or vehicle's translational acceleration, may not be considered in the formulation of most examples herein as these acceleration forces are typically negligible, but they may in some examples be considered for estimating the status of the wheel 10 as they may in some scenarios be subject to periodic behavior which may be used to estimate the rotational motion of the wheel 10.

In some examples, the centripetal acceleration component $a_c$ may be defined in terms of rotational speed $\omega$ of the wheel 10 and the radius r by:

$$a_c = \omega^2 r. \qquad (\mathrm{Eq.\ 2})$$

In some examples, by assuming that the road surface 5 is flat, i.e., a slope with an angle within a fixed interval and/or such that the road surface normal is in line with the gravitational acceleration vector $g$, the gravitational acceleration component may be defined as:

$$a_g = g \cos(\theta). \qquad (\mathrm{Eq.\ 1})$$

The rotational speed of the wheel 10 is in these examples considered to be stable. It may be possible to account for wheel speed changes e.g., by adding an error margin to each of the equations 1-3 above.

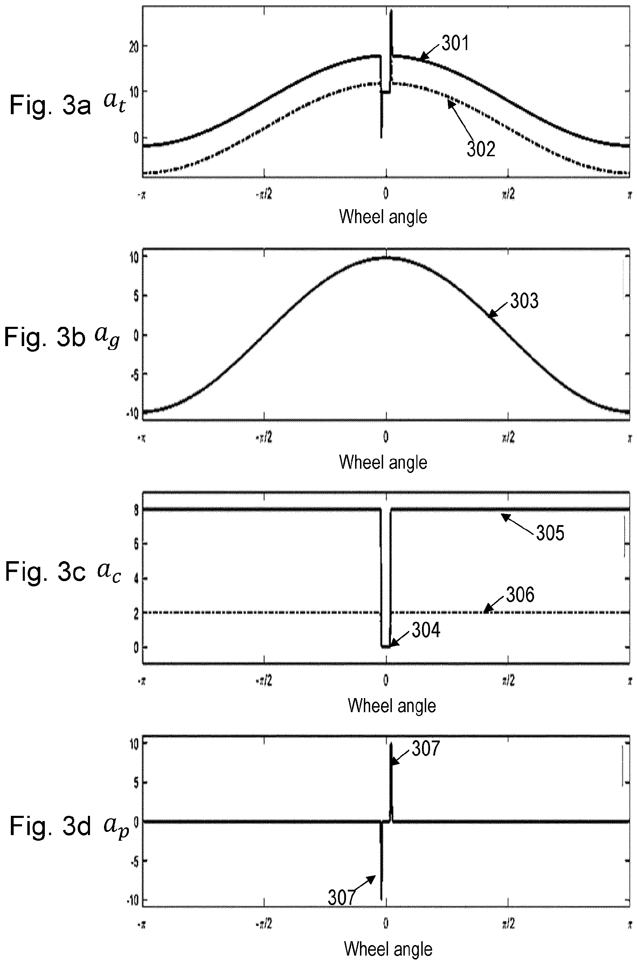

**FIGS 3a-d** illustrate the set of acceleration components as a function of the rotational angle of the wheel 10 for two different rotational speeds. The dashed line(s) has/have a lower rotational speed than the solid line(s). The X-axes indicate rotational angle of the wheel 10. The Y-Axes indicate acceleration, e.g., as in meters per squared second (m/s²).

**FIG. 3a** illustrates the total acceleration $a_t$ including all of the set of acceleration components as two separate curves over the two different rotational speeds of the wheel 10. A **first curve 301** is illustrated with a solid line. A **second curve 402** is illustrated with a dashed line. The first curve 301 is of a higher rotational speed than the second curve 302.

**FIG. 3b** illustrates the gravitational acceleration component $a_g$ as a **third curve 303.** The third curve 303 may correspond to the variation of the total acceleration $a_t$ as indicated in FIG. 3a. As illustrated, the third curve 303 is the same independent of the rotational speed and may correspond to both the first curve 301 and the second curve 302. This is since the gravitational acceleration is constant, and the only change is the location of the accelerometer 2 and its motion in contrast to the gravitational acceleration vector g. As the gravitational acceleration component is a trigonometric function, such as a sine wave, a period can be easily estimated or detected, and thereby a rotational speed of the wheel may be estimated, e.g., as part of actions 203.

**FIG. 3c** illustrates the centripetal acceleration component $a_c$. A **non-accelerating interval 304,** may occur when there is a road-contact event, during which time the accelerometer 2 may not be moving with respect to centripetal force. This may be used to detect a road-contact event, e.g., when the rotational angle is a predetermined angle such as 0 or belongs to a corresponding interval which may be used as a basis for estimating the rotational angle of the wheel 10. When the accelerometer 2 enter a tire contact patch area, e.g., which is in contact with the ground and is hence momentarily stationary, the acceleration measured by the accelerometer 2 will drop to zero. Note that this effect is only for a tire-mounted accelerometer and may not be seen in the case of a rim-mounted accelerometer, or may not be as prevalent.

When there is no road-contact event, acceleration remains constant, assuming a **constant acceleration intervals 305, 306** depending on the rotational motion of the wheel 10. As compared to the total acceleration $a_t$ it can be seen that the acceleration component $a_c$, or at least the **constant acceleration intervals 305, 306** may act as an offset to the gravitational acceleration component $a_g$ for forming the total acceleration $a_t$.

**FIG. 3d** illustrates the road-contact acceleration component $a_p$. As can be seen as **pulses 307** occurring as the rotational angle is in an interval around 0, i.e., when the accelerometer 2 is closest to the road surface 5, and otherwise it remains constant zero acceleration. In these situations, the vertical forces of the road surface 5 affect the accelerometer 2 in opposite directions. The vertical forces of the pulses 307 may be detected to detect a road-contact event of the wheel 10 and the accelerometer 2, e.g., when the rotational angle is a predetermined angle such as 0 which may be used as a basis for estimating the rotational angle of the wheel 10.

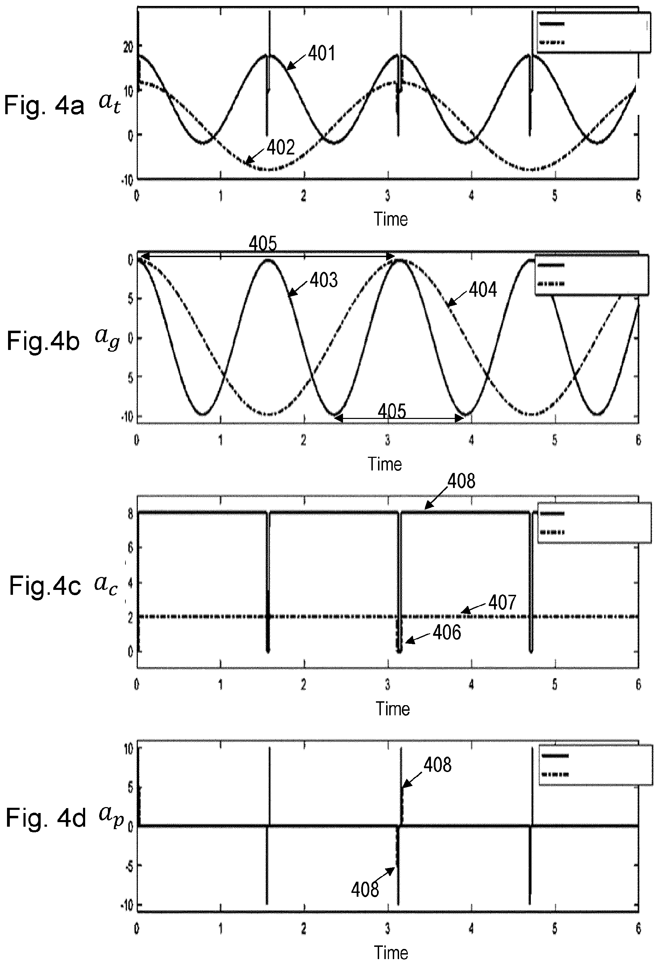

**FIGS. 4a-d** are illustrations of diagrams illustrating acceleration data according to an example in the form of a simulation experiment, where the rotational speeds are kept constant, the acceleration over time are visualized. The X-axes represents time. The Y-Axes represents acceleration, e.g., as in meters per squared second ($m/s^2$). The dashed line(s) has/have a lower rotational speed than the solid line(s).

**FIG. 4a** illustrates the total acceleration $a_t$ including all of the set of acceleration components as two separate curves over the two different rotational speeds of the wheel 10. A **fourth curve 401** is illustrated with a solid line. A **fifth curve 402** is illustrated with a dashed line. The fourth curve 401 is of a higher rotational speed than the fifth curve 402. The fourth curve 401 may correspond to the first curve 301. The fifth curve 402 may correspond to the second curve 302.

**FIG. 4b** illustrates the gravitational acceleration component $a_g$ as a **sixth curve 403** and a **seventh curve 404.** The sixth and seventh curve 403, 404, may correspond to the variation of the total acceleration $a_t$ as indicated in FIG. 4a, where the sixth curve 403 may correspond to the gravitational component of the fourth curve 401, and the seventh curve 404 may correspond to the gravitational component of the fifth curve 402. As illustrated, the sixth and seventh curve 403, 404 have different periodicity 405, 406, which defined the wheel speed of the wheel 10. This is why the gravitational component $a_g$ may be used, e.g., in action 203 to estimate the rotational motion of the wheel 10.

**FIG. 4c** illustrates the centripetal acceleration component $a_c$. A **non-accelerating interval 406,** may be when there is a road-contact event, during which time the accelerometer 2 may not be moving with respect to centripetal force which will happen with a periodicity, while frequency may change with rotational speed of the wheel 10.. This may be used to detect a road-contact event, e.g., when the rotational angle is a predetermined angle such as 0 or belonging to a corresponding interval which may be used as a basis for estimating the rotational angle of the wheel 10. When the accelerometer 2 enter a tire contact patch area, e.g., which is in contact with the ground and is hence momentarily stationary, the acceleration measured by the accelerometer 2 will drop to zero. Note that this effect is only for a tire-mounted accelerometer and may not be seen in the case of a rim-mounted accelerometer, or may not be as prevalent.

When there is no road-contact event, acceleration remains constant, assuming a **constant acceleration intervals 407, 408** depending on the rotational motion of the wheel 10. As compared to the total acceleration $a_t$ it can be seen that the acceleration component $a_c$, or at least the **constant acceleration intervals 407, 408** may act as an offset to the gravitational acceleration component $a_g$. for forming the total acceleration $a_t$.

**FIG. 4d** illustrates the road-contact acceleration component $a_p$. As can be seen as **pulses 408** occurring as the rotational angle is in an interval around 0, i.e., when the accelerometer 2 is closest to the road surface 5, and otherwise it remains constant zero acceleration, which will happen at a periodicity, but may change frequency with the rotational speed of the wheel 10. In these situations, the vertical forces of the road surface 5 affect the accelerometer 2 in opposite directions. The vertical forces of the pulses 408 may be detected to detect a road-contact event of the wheel 10 and the accelerometer 2, e.g., when the rotational angle is a predetermined angle such as 0 which may be used as a basis for estimating the rotational angle of the wheel 10.

In some examples herein, estimating the status of the wheel 10 may relate to using the total acceleration $a_t$, to derive the set of acceleration components, and to further use these to estimate the status of the wheel 10, e.g., the rotational angle and/or the motion of the wheel 10 such as wheel speed. This can be achieved by regarding the fact that the low-frequency variation in the observations as illustrated by FIGS 3a-d, 4a-d is originated from the gravitational acceleration component, which further may depend on the wheel rotational angle.

Therefore, extracting a low frequency of the first, second, fourth or fifth curve 301, 302, 401, 402, e.g., below a threshold, by means of any suitable technique, e.g., using filtering and/or frequency analysis such as part of action 202, may give access to the unknown rotational angle.

Furthermore, the dominant frequency of any of the first, second, fourth or fifth curve 301, 302, 401, 402, is closely associated with the rotational speed of the wheel.

Additionally or alternatively, an offset of the total acceleration of any of the first, second, fourth or fifth curve 301, 302, 401, 402, is primarily induced by the centripetal acceleration, which directly indicates the rotational speed. Accordingly, it possible to estimate the rotational speed of the wheel 10 considering the offset of the acceleration signal of any of the first, second, fourth or fifth curve 301, 302, 401, 402.

Moreover, there is another distinctive pattern in the observed acceleration signal resulted from a road-contact event of any of the first, second, fourth or fifth curve 301, 302, 401, 402. When a corresponding section of the tire of the wheel 10 along an observation angle of the accelerometer 2 comes into contact with the road surface 5, it leads to high-frequency variations. Consequently, it is possible to identify the road-contact event by filtering for the relevant frequency content which may provide absolute information about the rotational angle of the wheel 10. This may relate to a predefined pattern and/or frequency intervals used to detect the road-contact event and further use said detected event to estimate the statue of the wheel 10, e.g., as part of action 203. Additionally, obtaining a rate at which the contact event occurs through time may be used to further improve accuracy for estimating the rotational speed of the wheel 10, e.g., as part of action 203.

Redundancy aspects

In some examples herein, it may further be possible to obtain rotational motion, e.g., rotational speed, along the rotational axis of the wheel 10 by the IMU 50, e.g., which may be a 6 Degrees of Freedom (6DoF) IMU. In these examples it may be possible, e.g., as part of action 203 to fuse wheel status estimations from the IMU to get better estimates of the rotational angle as part of action 203. For example, if the rotational speed can be accurately estimated by the IMU 50, the rotational angle may be accordingly estimated based on the set of acceleration components, and assuming the rotational speed as estimated by the IMU 50, e.g., as part of action 203.

A wheel-mounted IMU, i.e., the IMU 50, may have a similar acceleration profile, but without the characteristic "bump", i.e., non-acceleration intervals 304, 406 and pulses 307, 408 as the IMU travels over a contact patch area of the accelerometer 2 and the tire 11, which may be illustrated in FIGS 3c-d and 4c-d. The same methodology as described above may be used in this case as well, but where counting the "bumps" i.e., the non-acceleration intervals 304, 406 and/or the pulses 307, 408, to estimate wheel rotation speed or using it to reset the wheel rotational position estimation may no longer be possible.

Furthermore, it may be possible to merge estimation of the IMU 50 and in actions 203 to improve accuracy and/or reliability of estimating the status of the wheel 10.

Wheel status in a slope

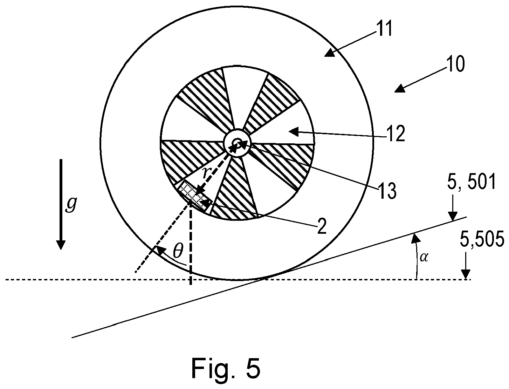

**FIG. 5** is an illustration of the wheel 10 in a **slope 501** according to an example. The slope 501 may be the road surface 5, but angled at an angle $\alpha$ as compared to no slope. A reference line 505 may illustrate the road surface 5 if there was no slope.

In these examples, the acceleration observations, i.e., the total acceleration and the set of acceleration components behave differently due to the slope 501, and may accordingly be used to estimate the road slope angle, e.g., as part of action 204. In particular, the gravitational acceleration component is shifted, with respect to rotational angle but the other components may stay the same. This is since gravity is always the same, but the angle $\theta$ at which the accelerometer 2 is directed towards the road surface 5 to measure an acceleration change relative to the direction of the gravitational vector $g$.

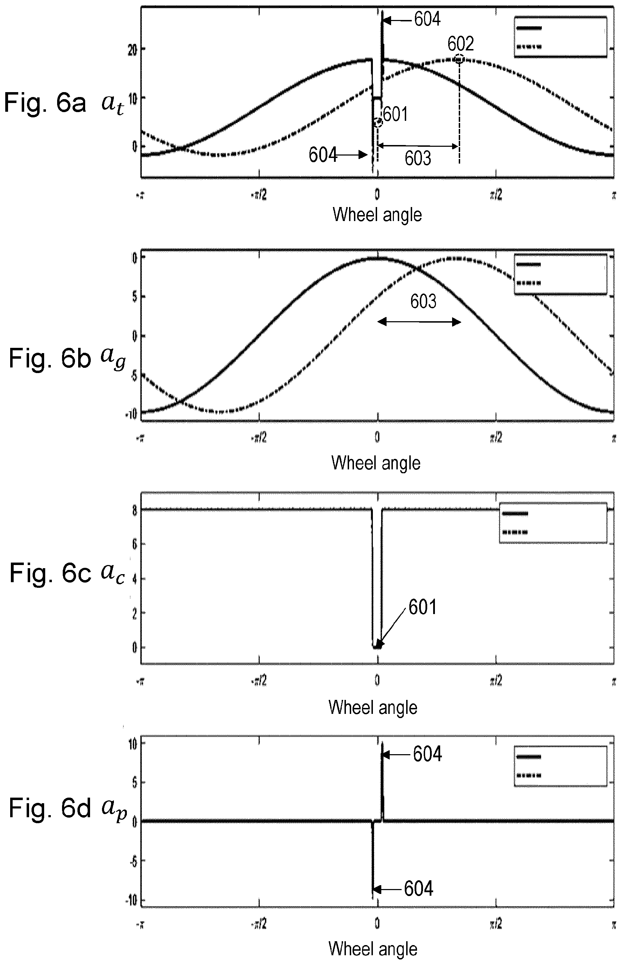

**FIGS. 6a-d** illustrates the acceleration in the slope 501. A rotational angle of the wheel 10 is illustrated in the X-axis, and acceleration in the Y-axis. The dashed line(s) illustrates how the wheel 10 travels with a constant wheel speed, or a wheels speed within an error margin interval, over the road surface 5 when there is a slope 501.

The solid line(s) illustrates how the wheel 10 travelled with the same or comparable rotational wheel motion over the road surface 5 when there was no road slope, e.g., as in the reference 505. Comparable rotational wheel motion means that the wheel 10 were travelling at a speed within an error margin of how the wheel 10 is travelling with respect to the solid line.

**FIG. 6a** illustrates the total acceleration $a_t$. **FIG. 6b** illustrates the gravitational acceleration component $a_g$. **FIG. 6c** illustrates the centripetal acceleration component $a_c$. **FIG. 6d** illustrates the road-contact acceleration component $a_p$.

It may be seen that when there is a road slope 501, the gravitational acceleration component is naturally shifted with respect to the wheel rotation angle with a **shift 603**. The shift 603 may be used to estimate the angle of the slope 501, e.g., based on a predefined slope model.

To identify the shift 603, it may be needed to identify the road-contact event by detecting pulses 604 of the road-contact acceleration component and/or non-acceleration intervals 601 of the centripetal acceleration component, e.g., as described in above actions or examples.

After obtaining the rotation angle of the wheel 10, e.g., by any suitable method such as discussed above, it is possible to estimate the shift 603 and to estimate the road angle, e.g., as part of action 204. The shift 603 may be estimated as the offset in rotational angle for the maximum amplitude of the gravitational acceleration component, with respect to an identified road-contact event.

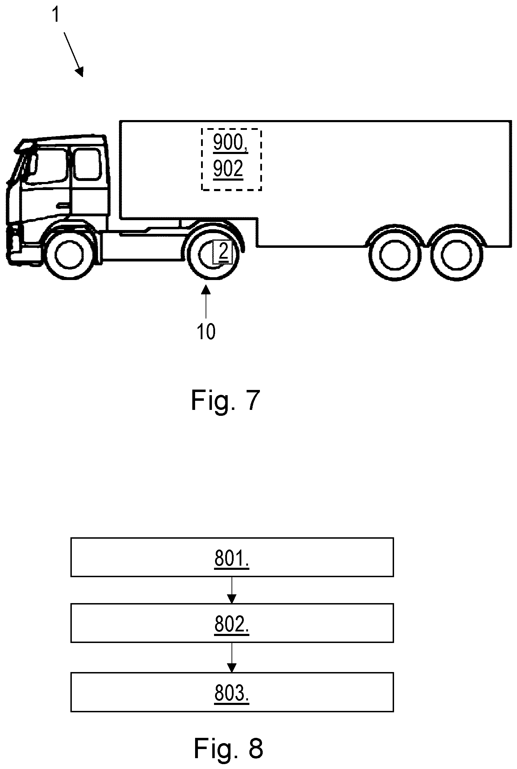

**FIG. 7** is another view of **FIG. 1,** according to an example.

The computer system 900 comprising the processing circuitry 902, configured to handle acceleration data of the accelerometer 2 is provided. The accelerometer 2 is arranged to measure acceleration of the wheel 10 of the vehicle 1.

The processing circuitry 902 is configured to obtain acceleration data from the accelerometer 2. The acceleration data is indicative of a total acceleration measured by the accelerometer 2 over a time period.

The processing circuitry 902 is configured to derive from the acceleration data, a set of acceleration components for the time period. Each component in the set of acceleration components indicates a respective portion of the total acceleration.

The processing circuitry 902 is configured to estimate a status of the wheel 10 based on the set of acceleration components. The status of the wheel 10 comprises a rotational angle of the wheel 10 and/or a rotational motion of the wheel 10.

**FIG. 8** is a flow chart of a computer-implemented method for handling acceleration data of the accelerometer 2 according to an example. The accelerometer 2 is arranged to measure acceleration of the wheel 10 of the vehicle 1.

The method comprises the following actions 801-803 which may be combined with any one or more out of actions 201-204 in any suitable manner.

**Action 801**

The method comprises, by the processing circuitry 902 of the computer system 900, obtaining acceleration data from the accelerometer 2. The acceleration data is indicative of a total acceleration measured by the accelerometer 2 over a time period.

**Action 802**

The method comprises, by the processing circuitry 902, deriving from the acceleration data, a set of acceleration components for the time period. Each component in the set of acceleration components indicates a respective portion of the total acceleration.

**Action 803**

The method comprises, by the processing circuitry 902, estimating a status of the wheel 10 based on the set of acceleration components. The status of the wheel 10 comprises a rotational angle of the wheel 10 and/or a rotational motion of the wheel 10.

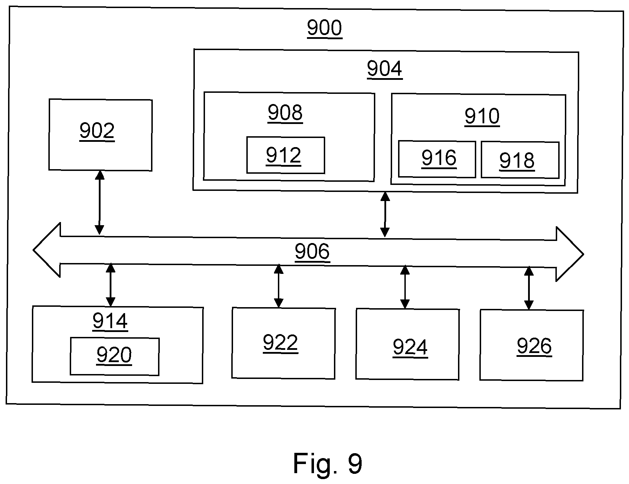

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples 1-20 which summarize the features discussed above. The below Examples may be combined with any of the above examples in any suitable manner.

**Example 1.** A computer system 900 comprising processing circuitry 902 configured to handle acceleration data of an accelerometer 2 arranged to measure acceleration of a wheel 10 of a vehicle 1, the processing circuitry 902 being configured to:

- obtain acceleration data from the accelerometer 2, the acceleration data being indicative of a total acceleration $a_t$ measured by the accelerometer 2 over a time period,
- derive from the acceleration data, a set of acceleration components $a_c$, $a_g$, $a_p$ for the time period, wherein each component in the set of acceleration components $a_c$, $a_g$, $a_p$ indicates a respective portion of the total acceleration $a_t$,
- estimate a status of the wheel 10 based on the set of acceleration components $a_c$, $a_g$, $a_p$, wherein the status of the wheel 10 comprises a rotational angle of the wheel 10 and/or a rotational motion of the wheel 10.

**Example 2.** The computer system 900 of Example 1, wherein the set of acceleration components $a_c$, $a_g$, $a_p$ comprises any one or more out of a gravitational acceleration component $a_g$, a centripetal acceleration component $a_c$, and a road-contact acceleration component $a_p$ wherein

- the gravitational acceleration component $a_g$ is indicative of a gravitational acceleration caused by a gravitational force as the wheel 10 is rotated,
- the centripetal acceleration component $a_c$ is indicative of a centripetal acceleration caused by the accelerometer 2 being subject to a centripetal force when the wheel 10 is rotated,
- and the road-contact acceleration component $a_p$ is indicative of an acceleration caused by the accelerometer 2 being subject to a vertical force as a tire 11 of the wheel 10 impacts a road surface 5 when the wheel 10 is rotated over the road surface 5.

**Example 3.** The computer system 900 of Example 2, wherein the rotational motion is estimated based on a periodicity or frequency associated with any one or more components out of the set of components $a_c$, $a_g$, $a_p$, and preferably based on the gravitational acceleration component $a_g$ or the road-contact acceleration component $a_p$.

**Example 4.** The computer system 900 of Example 2 or 3, wherein the rotational motion is estimated based on an amplitude associated with any one or more components out of the set of components $a_c$, $a_g$, $a_p$, preferably based on the centripetal acceleration component $a_c$.

**Example 5.** The computer system 900 of any of Examples 2-4, wherein the rotational angle of the wheel 10 is estimated based on the road-contact acceleration component $a_p$.

**Example 6.** The computer system 900 of any of Examples 2-5, wherein the rotational angle of the wheel 10 is estimated based on frequency analysis of the gravitational acceleration component $a_g$.

**Example 7.** The computer system 900 of any of Examples 2-6, wherein the gravitational acceleration component $a_g$ is derived based on identifying a variation in the acceleration data.

**Example 8.** The computer system 900 of any of Examples 2-7, wherein the road-contact acceleration component $a_p$ is derived based on identifying an road-contact event of the acceleration data, and based on identifying a variation in the acceleration data caused by the identified road-contact event.

**Example 9.** The computer system 900 of any of Examples 2-8, wherein the centripetal acceleration component $a_c$ is derived based on a predefined model and a mounting position of the accelerometer 2 with respect to the wheel 10 or tire 11 of the wheel 10.

**Example 10.** The computer system 900 of any of Examples 2-9, wherein the processing circuitry 902 is configured to, based on the set of components $a_c$, $a_g$, $a_p$, estimate an angle of a slope 501 travelled by the vehicle 1 by:

- detecting a road-contact event based on the road-contact acceleration component $a_p$,
- in response to detecting the road-contact event, identifying an angular shift of the rotational angle of the wheel 10 and the gravitational acceleration component $a_g$, and
- estimating the angle of the slope 501 based on the identified angular shift.

**Example 11.** The computer system 900 of any of Examples 2-10, wherein the processing circuitry 902 is configured to estimate the status of the wheel 10 further based on one or more measurements of an Inertial Measurement Unit 50 of the vehicle 1.

**Example 12.** A vehicle 1 comprising the computer system 900 of any of Examples 1-11, the vehicle 1 comprising an accelerometer 2 configured to measure acceleration of a wheel 10 of the vehicle 1.

**Example 13.** The vehicle 1 of Example 12, wherein the accelerometer 2 is a single-axis accelerometer 2 configured to only measure acceleration along a single axis.

**Example 14.** A computer-implemented method for handling acceleration data of an accelerometer 2 arranged to measure acceleration of a wheel 10 of a vehicle 1, the method comprising:

by processing circuitry 902 of a computer system 900, obtaining 201, 801 acceleration data from the accelerometer 2,

the acceleration data being indicative of a total acceleration $a_t$ measured by the accelerometer 2 over a time period, by the processing circuitry 902, deriving 202, 802 from the acceleration data, a set of acceleration components $a_c$, $a_g$, $a_p$ for the time period, wherein each component in the set of acceleration components $a_c$, $a_g$, $a_p$ indicates a respective portion of the total acceleration $a_t$,

by the processing circuitry 902, estimating 203, 803 a status of the wheel 10 based on the set of acceleration components $a_c$, $a_g$, $a_p$, wherein the status of the wheel 10 comprises a rotational angle of the wheel 10 and/or a rotational motion of the wheel 10.

**Example 15.** The method of Example 14, wherein the set of acceleration components $a_c$, $a_g$, $a_p$ comprises any one or more out of a gravitational acceleration component $a_g$, a centripetal acceleration component $a_c$, and a road-contact acceleration component $a_p$ wherein

- the gravitational acceleration component $a_g$ is indicative of a gravitational acceleration caused by a gravitational force as the wheel 10 is rotated,
- the centripetal acceleration component $a_c$ is indicative of a centripetal acceleration caused by the accelerometer 2 being subject to a centripetal force when the wheel 10 is rotated,
- and the road-contact acceleration component $a_p$ is indicative of an acceleration caused by the accelerometer 2 being subject to a vertical force as a tire 11 of the wheel 10 impacts a road surface 5 when the wheel 10 is rotated over the road surface 5.

**Example 16.** The method of Example 14 or 15, wherein the rotational motion is estimated 203 based on any one or more out of:

- a periodicity or frequency associated with any one or more components out of the set of components $a_c$, $a_g$, $a_p$, and preferably based on the gravitational acceleration component $a_g$ or the road-contact acceleration component $a_p$, and
- an amplitude associated with any one or more components out of the set of components $a_c$, $a_g$, $a_p$, preferably based on the centripetal acceleration component $a_c$.

**Example 17.** The method of any of Examples 14-16, wherein the rotational angle of the wheel 10 is estimated based on any one or more out of:

- the road-contact acceleration component $a_p$, and
- frequency analysis of the gravitational acceleration component $a_g$.

**Example 18.** The method of any of Examples 14-17, wherein the method further comprises, based on the set of components $a_c$, $a_g$, $a_p$, estimating 204 an angle of a slope 501 travelled by the vehicle 1 by:

- detecting a road-contact event based on the road-contact acceleration component $a_p$,
- in response to detecting the road-contact event, identifying an angular shift of the rotational angle of the wheel 10 and the gravitational acceleration component $a_g$, and
- estimating the angle of the slope 501 based on the identified angular shift.

**Example 19.** A computer program product comprising program code for performing, when executed by the processing circuitry 902, the method of any of Examples 1-11.

**Example 20.** A non-transitory computer-readable storage medium comprising instructions, which when executed by the processing circuitry 902, cause the processing circuitry 902 to perform the method of any of Examples 1-11.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (900) comprising processing circuitry (902) configured to handle acceleration data of an accelerometer (2) arranged to measure acceleration of a wheel (10) of a vehicle (1), the processing circuitry (902) being configured to:

   - obtain acceleration data from the accelerometer (2), the acceleration data being indicative of a total acceleration $(a_t)$ measured by the accelerometer (2) over a time period,
   - derive from the acceleration data, a set of acceleration components $(a_c, a_g, a_p)$ for the time period, wherein each component in the set of acceleration components $(a_c, a_g, a_p)$ indicates a respective portion of the total acceleration $(a_t)$,
   - estimate a status of the wheel (10) based on the set of acceleration components $(a_c, a_g, a_p)$, wherein the status of the wheel (10) comprises a rotational angle of the wheel (10) and/or a rotational motion of the wheel (10).

2. The computer system (900) of claim 1, wherein the set of acceleration components $(a_c, a_g, a_p)$ comprises any one or more out of a gravitational acceleration component $(a_p)$, a centripetal acceleration component $(a_c)$, and a road-contact acceleration component $(a_p)$ wherein

   - the gravitational acceleration component $(a_g)$ is indicative of a gravitational acceleration caused by a gravitational force as the wheel (10) is rotated,
   - the centripetal acceleration component $(a_c)$ is indicative of a centripetal acceleration caused by the accelerometer (2) being subject to a centripetal force when the wheel (10) is rotated,
   - and the road-contact acceleration component $(a_p)$ is indicative of an acceleration caused by the accelerometer (2) being subject to a vertical force as a tire (11) of the wheel (10) impacts a road surface (5) when the wheel (10) is rotated over the road surface (5).

3. The computer system (900) of claim 2, wherein the rotational motion is estimated based on any one or more out of:

   - a periodicity or frequency associated with any one or more components out of the set of components, and preferably based on the gravitational acceleration component $(a_g)$ or the road-contact acceleration component $(a_p)$, and
   - an amplitude associated with any one or more components out of the set of components $(a_c, a_g, a_p)$, preferably based on the centripetal acceleration component $(a_c)$.

4. The computer system (900) of any of claims 2-3, wherein the rotational angle of the wheel (10) is estimated based on the road-contact acceleration component $(a_p)$ and/or based on frequency analysis of the gravitational acceleration component $(a_g)$.

5. The computer system (900) of any of claims 2-4, wherein the gravitational acceleration component $(a_g)$ is derived based on identifying a variation in the acceleration data.

6. The computer system (900) of any of claims 2-5, wherein the road-contact acceleration component ($a_p$) is derived based on identifying an road-contact event of the acceleration data, and based on identifying a variation in the acceleration data caused by the identified road-contact event.

7. The computer system (900) of any of claims 2-6, wherein the centripetal acceleration component ($a_c$) is derived based on a predefined model and a mounting position of the accelerometer (2) with respect to the wheel (10) or tire (11) of the wheel (10).

8. The computer system (900) of any of claims 2-7, wherein the processing circuitry (902) is configured to, based on the set of components $(a_c, a_g, a_p)$, estimate an angle of a slope (501) travelled by the vehicle (1) by:

   - detecting a road-contact event based on the road-contact acceleration component ($a_p$),
   - in response to detecting the road-contact event, identifying an angular shift of the rotational angle of the wheel (10) and the gravitational acceleration component ($a_p$), and
   - estimating the angle of the slope (501) based on the identified angular shift.

9. The computer system (900) of any of claims 2-8, wherein the processing circuitry (902) is configured to estimate the status of the wheel (10) further based on one or more measurements of an Inertial Measurement Unit (50) of the vehicle (1).

10. A vehicle (1) comprising the computer system (900) of any of claims 1-9, the vehicle (1) comprising an accelerometer (2) configured to measure acceleration of a wheel (10) of the vehicle (1).

11. The vehicle (1) of claim 10, wherein the accelerometer (2) is a single-axis accelerometer (2) configured to only measure acceleration along a single axis.

12. A computer-implemented method for handling acceleration data of an accelerometer (2) arranged to measure acceleration of a wheel (10) of a vehicle (1), the method comprising:

   by processing circuitry (902) of a computer system (900), obtaining (201, 801) acceleration data from the accelerometer (2), the acceleration data being indicative of a total acceleration ($a_t$) measured by the accelerometer (2) over a time period,
   by the processing circuitry (902), deriving (202, 802) from the acceleration data, a set of acceleration components $(a_c, a_g, a_p)$ for the time period, wherein each component in the set of acceleration components $(a_c, a_g, a_p)$ indicates a respective portion of the total acceleration ($a_t$),
   by the processing circuitry (902), estimating (203, 803) a status of the wheel (10) based on the set of acceleration components $(a_c, a_g, a_p)$, wherein the status of the wheel (10) comprises a rotational angle of the wheel (10) and/or a rotational motion of the wheel (10).

13. The method of claim 12, wherein the set of acceleration components $(a_c, a_g, a_p)$ comprises any one or more out of a gravitational acceleration component ($a_p$), a centripetal acceleration component ($a_c$), and a road-contact acceleration component ($a_p$) wherein

   - the gravitational acceleration component ($a_g$) is indicative of a gravitational acceleration caused by a gravitational force as the wheel (10) is rotated,
   - the centripetal acceleration component ($a_c$) is indicative of a centripetal acceleration caused by the accelerometer (2) being subject to a centripetal force when the wheel (10) is rotated,
   - and the road-contact acceleration component ($a_p$) is indicative of an acceleration caused by the accelerometer (2) being subject to a vertical force as a tire (11) of the wheel (10) impacts a road surface (5) when the wheel (10) is rotated over the road surface (5).

14. A computer program product comprising program code for performing, when executed by the processing circuitry (902), the method of any of claims 12-13.

15. A non-transitory computer-readable storage medium comprising instructions, which when executed by the processing circuitry (902), cause the processing circuitry (902) to perform the method of any of claims 12-13.

Fig. 1

Fig. 2

Fig. 3a $a_t$

Wheel angle

Fig. 3b $a_g$

Wheel angle

Fig. 3c $a_c$

Wheel angle

Fig. 3d $a_p$

Wheel angle

Fig. 4a $a_t$

Fig.4b $a_g$

Fig.4c $a_c$

Fig. 4d $a_p$

Fig. 5

Fig. 6a $a_t$

Wheel angle

Fig. 6b $a_g$

Wheel angle

Fig. 6c $a_c$

Wheel angle

Fig. 6d $a_p$

Wheel angle

900,
902

2

10

Fig. 7

801.

802.

803.

Fig. 8

Fig. 9

Europäisches
Patentamt

European
Patent Office

Office européen
des brevets

# EUROPEAN SEARCH REPORT

**Application Number**

EP 24 16 0939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 165 842 B2 (HELCK CHRISTIAN [DE]; TRAJET GMBH [DE]) 24 April 2012 (2012-04-24) | 1-3,5, 9-15 | INV. B60T8/171 B60T8/1761 |
| A | * column 2, line 49 - column 8, line 23; claims 1-20 * | 7,8 | |
| | ----- | | |
| X | US 2019/143987 A1 (SEKIZAWA TAKATOSHI [JP] ET AL) 16 May 2019 (2019-05-16) | 1-4,6,9, 11,12, 14,15 | |
| A | * paragraph [0021] - paragraph [0064]; claims 1-5 * | 7,8 | |
| | ----- | | |
| X | US 2018/030910 A1 (ROCHER JACQUES [FR] ET AL) 1 February 2018 (2018-02-01) | 1,12,14, 15 | |
| A | * claims 1-20 * | 7,8 | |
| | ----- | | |
| X | US 2023/258682 A1 (FU DAOPENG [CN]) 17 August 2023 (2023-08-17) | 1,12,14, 15 | |
| A | * paragraph [0004] - paragraph [0057] * | 7,8 | |
| | ----- | | |

**TECHNICAL FIELDS SEARCHED (IPC)**

B60T

The present search report has been drawn up for all claims

| Place of search | Date of completion of the search | Examiner |
|---|---|---|
| Munich | 13 August 2024 | Graniou, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 0939

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | | Publication date | Patent family member(s) | | Publication date |
|---|---|---|---|---|---|
| US 8165842 | B2 | 24-04-2012 | CN | 101432155 A | 13-05-2009 |
| | | | DE | 102006020471 A1 | 08-11-2007 |
| | | | EP | 2013039 A1 | 14-01-2009 |
| | | | ES | 2629765 T3 | 14-08-2017 |
| | | | JP | 5135329 B2 | 06-02-2013 |
| | | | JP | 2009535611 A | 01-10-2009 |
| | | | US | 2010010770 A1 | 14-01-2010 |
| | | | WO | 2007125033 A1 | 08-11-2007 |
| US 2019143987 | A1 | 16-05-2019 | JP | 6627670 B2 | 08-01-2020 |
| | | | JP | 2018009869 A | 18-01-2018 |
| | | | US | 2019143987 A1 | 16-05-2019 |
| | | | WO | 2018012249 A1 | 18-01-2018 |
| US 2018030910 | A1 | 01-02-2018 | CN | 107407561 A | 28-11-2017 |
| | | | FR | 3032523 A1 | 12-08-2016 |
| | | | US | 2018030910 A1 | 01-02-2018 |
| | | | WO | 2016128114 A1 | 18-08-2016 |
| US 2023258682 | A1 | 17-08-2023 | NONE | | |

EPO FORM P0459

For more details about this annex : see Official Journal of the European Patent Office, No. 12/82